# EUROPEAN PATENT APPLICATION

(11) **EP 1 302 850 A2**
(43) Date of publication of application: **16.04.2003**
(21) Application number: 02022799.7
(22) Date of filing: 11.10.2002
(51) Int. Cl.: G06F 9/44

(54) **Automatic software input panel selection based on application program state**

(30) Priority: 12.10.2001 US 976186
(71) Applicant: MICROSOFT CORPORATION, Redmond, WA 98052 (US)
(72) Inventor: Andrew, Felix G., Seattle, Washington 98105 (US)
(74) Representative: Grünecker, Kinkeldey, Stockmair & Schwanhäusser Anwaltssozietät

(57) **Abstract**

A method and system for automatically selecting a software input method and/or adjusting the keys displayed on a software input panel of a software input method based on the state of an application program, such as corresponding to the currently focused field in which data is to be entered. An application communicates with a software input method manager to provide the software input method manager with information related to a desired input method, or the manager otherwise obtains the state information. Based on the state, an input panel is displayed that automatically changes its keyboard layout and key meanings based on what the user is likely to need, thereby increasing convenience and/or usability of the input system. The keys' appearances and/or their underlying meanings can be dynamically configured based on previously-entered user data, such as maintained and sent by the application program or maintained by the software input method manager.

## Description

### FIELD OF THE INVENTION

The invention relates generally to computer systems, and more particularly to the input of data into a computer system.

### BACKGROUND OF THE INVENTION

Small, mobile computing devices such as personal desktop assistants, including hand-held and pocket-sized computers, tablet personal computers and the like, are becoming important and popular user tools. In general, they have become small enough to be extremely convenient, while consuming less battery power, and at the same time have become capable of running more powerful applications.

Although the computing circuitry of such devices continues to shrink in size, size limitations are being reached as a result of human limitations. For example, a full character keyboard that enables user data input cannot be so small that human fingers cannot depress the individual keys thereon. As a result, many such devices (e.g., palm-size computers) have eliminated physical keyboards, and instead provide a representation of a keyboard on touch-sensitive display. To this end, the user enters characters by touching the screen with a stylus at locations corresponding to the displayed keys. Of course, touch-screen devices can also be used simultaneously with devices having physical keyboards, whereby characters can also be entered by manually pressing the keys of the physical keyboard.

While a touch-screen device serves to provide a suitable means of user data entry, data entry panels and the keys displayed thereon are typically very small, which slows down user data entry and leads to erroneous data input. Among other reasons, this is because the application receiving the keyed input needs to use some of the display area for displaying input fields and the like to the user, thus limiting the area available for displaying the keyboard. One way in which the individual keys may be made larger is to distribute the keys among various user-selectable keyboards according to some logical distinction, e.g., one keyboard for entering alphabetic characters, one for entering numeric characters and another for entering punctuation symbols. This may help by increasing key size, but potentially requires the user to do a lot of switching between the keyboards, and to hunt among the multiple keyboards for a desired character. For example, proper sentences include punctuation, however to include a complete set of alphabetic and punctuation symbols on a single displayed keyboard would render the keys on typical palm-size computers too small for many users. Thus, some or all of the punctuation symbols may be placed on a separate keyboard that the user manually can select.

In general, when limited by display area, there is a tradeoff between displaying more keys for a user's convenience versus their size, and thus their usability. Improvements in convenience within a limited display area without significantly impacting usability, or even to an extent increasing usability, are thus continually being sought.

### SUMMARY OF THE INVENTION

Briefly, the present invention provides a method and system for automatically selecting a software input method and/or adjusting the keys displayed on a software input panel of a software input method based on the state of an application, e.g., a state corresponding to the currently focused field in which data is to be entered. The application is independent from the software input method and its input panel, in that, for example, virtually any application can be used interchangeably with virtually any input method, thus various enabling applications and various input methods to be developed without necessarily having knowledge of one another's features or capabilities. The keys need not be individual characters, but can represent strings of characters or other symbols, such as those most likely to be needed by a user when entering data. For example, when editing in a browser's address field, the user's most-recently accessed Internet and/or Intranet websites may appear on displayed keys for easy selection, along with strings such as "http:/" "www." and/or ".com" that are frequently needed.

In one implementation, an application communicates with a software input method manager to provide the software input method manager with information related to a desired input method. For example, the application can communicate state information corresponding to a field identifier, whereby the software input method manager can select an appropriate input method for that field. Note that this can be when the field initially receives focus, or can be at some other time, such as when a user has entered a certain character or string. Further, the application can provide some of the displayed key choices to the software input method, such as via the software input method manager, so that the keys can reflect what the application wants displayed and/or what they represent, e.g., a favorites or most recently used list, with representative names to display for user selection.

In an alternative implementation, the software input method manager communicates with a state determination mechanism that is external to the application, yet can determine the state of the application, such as its currently focused field, (e.g., via the field's window class and other available data), such that the software input method manager can select a suitable input method. For example, the state determination mechanism can determine that a field of the application is directed to receiving an Internet or Intranet address, and can thus communicate state information corresponding to a field identifier to the software input method manager. The software input method manager can then select an appropriate input method for that field.

In this manner, an input method with a different input panel may be automatically selected, or an input method may automatically change its input panel to one with a different keyboard layout and/or key meanings, based on what the user is likely to need for a given application's state. Because at least some of the keys are tailored to the likely input, this can increase convenience and/or usability of an input system.

Other advantages will become apparent from the following detailed description when taken in conjunction with the drawings, in which:

### BRIEF DESCRIPTION OF THE DRAWINGS

FIGURE 1 is a block diagram representing a computer system into which the present invention may be incorporated;
FIG. 2 is a block diagram representing an input method manager communicating with an application for selection of an input method in accordance with an aspect of the present invention;
FIG. 3 is a block diagram representing an input method manager communicating with a state determination mechanism for selection of an input method in accordance with an aspect of the present invention;
FIG. 4 is a representation of an application and a displayed input panel of a selected input method that is to be changed based on application state in accordance with an aspect of the present invention;
FIGS. 5-8 are representations of displayed input panels in the form of keyboards that may be selected based on an application program's state in accordance with an aspect of the present invention; and
FIG. 9 is a flow diagram describing general logic for selecting an input method based on an application's state in accordance with an aspect of the present invention.

### DETAILED DESCRIPTION OF THE PREFERRED EMBODIMENT

### Exemplary Operating Environment

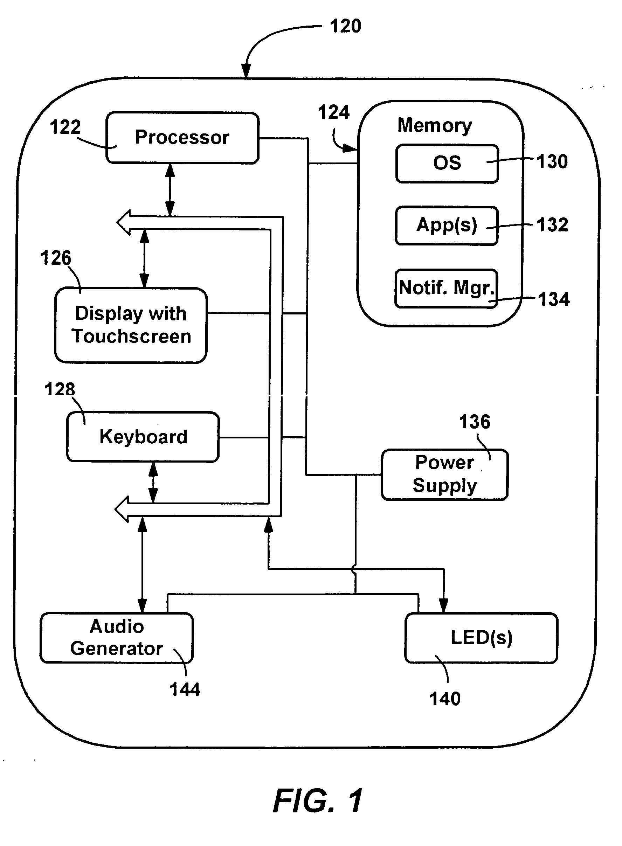

FIGURE 1 illustrates an example of a suitable operating environment 120 in which the invention may be implemented, particularly for decoding image and/or video data. The operating environment 120 is only one example of a suitable operating environment and is not intended to suggest any limitation as to the scope of use or functionality of the invention. Other well known computing systems, environments, and/or configurations that may be suitable for use with the invention include, but are not limited to, personal computers, server computers, hand-held or laptop devices, multiprocessor systems, microprocessor-based systems, programmable consumer electronics, network PCs, minicomputers, mainframe computers, distributed computing environments that include any of the above systems or devices, and the like. For example, it is likely that encoding image and/or video image data often will be performed on a computer with more processing power than contemporary hand-held personal computers, but there is no reason encoding cannot be performed on the exemplary device, or decoding on a more powerful machine.

The invention may be described in the general context of computer-executable instructions, such as program modules, executed by one or more computers or other devices. Generally, program modules include routines, programs, objects, components, data structures and so forth that perform particular tasks or implement particular abstract data types. Typically the functionality of the program modules may be combined or distributed as desired in various embodiments.

Computing device 120 typically includes at least some form of computer readable media. Computer-readable media can be any available media that can be accessed by the computing device 120. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by the computing device 120. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

FIG. 1 shows functional components of one such handheld computing device 120, including a processor 122, a memory 124, a display 126, and a keyboard 128 (which may be a physical or virtual keyboard). The memory 124 generally includes both volatile memory (e.g., RAM) and non-volatile memory (e.g., ROM, PCMCIA cards, and so forth). An operating system 130 is resident in the memory 124 and executes on the processor 122, such as the Windows® CE operating system from Microsoft® Corporation, or another operating system.

One or more application programs 132 are loaded into memory 124 and run on the operating system 130. Examples of applications include email programs, scheduling programs, PIM (personal information management) programs, word processing programs, spreadsheet programs, Internet browser programs, and so forth. The handheld personal computer 120 may also include a notification manager 134 loaded in the memory 124, which executes on the processor 122. The notification manager 134 handles notification requests, e.g., from the application programs 132.

The handheld personal computer 120 has a power supply 136, which is implemented as one or more batteries. The power supply 136 may further include an external power source that overrides or recharges the built-in batteries, such as an AC adapter or a powered docking cradle.

The exemplary handheld personal computer 120 represented in FIG. 1 is shown with three types of external notification mechanisms: one or more light emitting diodes (LEDs) 140 and an audio generator 144. These devices may be directly coupled to the power supply 136 so that when activated, they remain on for a duration dictated by a notification mechanism even though the handheld personal computer processor 122 and other components might shut down to conserve battery power. The LED 140 preferably remains on indefinitely until the user takes action. Note that contemporary versions of the audio generator 144 use too much power for today's handheld personal computer batteries, and so it is configured to turn off when the rest of the system does or at some finite duration after activation.

### INTERCHANGEABLE SOFTWARE INPUT METHODS

The present invention uses an architecture that is primarily designed to enable character, key-based and other user data input via the touch screen 126 of the device rather than a physical keyboard. However, as can be appreciated, a given computer system 120 may optionally and additionally include a physical keyboard, not separately shown herein for purposes of simplicity. Moreover, as will become apparent, the "software input panel" need not be an actual touch-sensitive panel arranged for directly receiving input via contact or proximity to the panel, but may alternatively operate via another input device such as a microphone. For example, spoken words may be received at a microphone, recognized, and displayed as text in an on-screen window, i.e., a soft input panel.

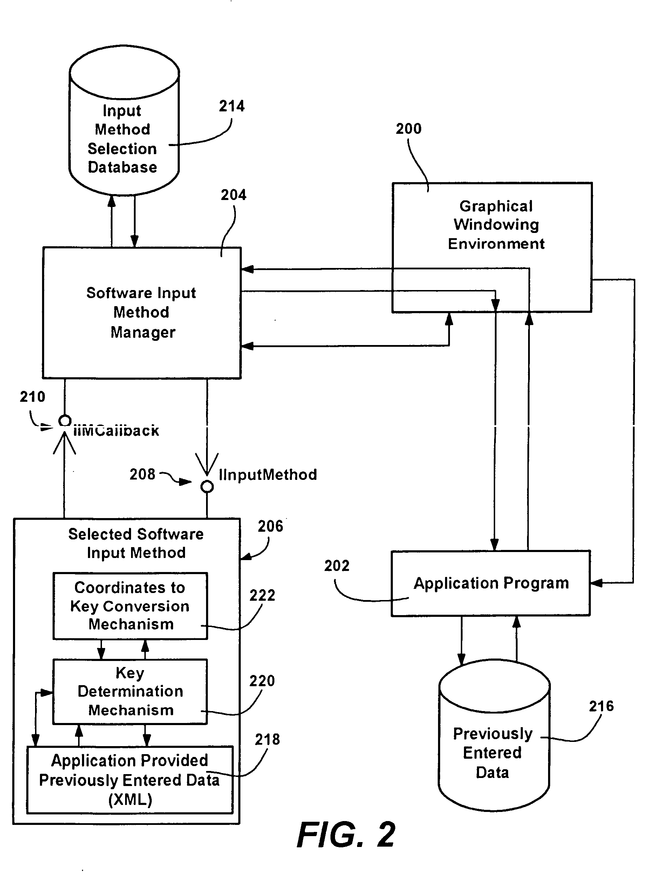

FIG. 2 shows a block diagram implementing a general software input panel architecture, as also described in United States Patent Application Serial No. 08/991,277, assigned to the assignee of the present invention. As represented in FIGS. 1 and 2, the computer system 120 (FIG. 1) includes an operating system 130, which may incorporate a graphical windowing environment 200 (FIG. 2). Such a graphical windowing environment 200 is generally operational to receive user input through a variety of devices including the keyboard 128 of FIG. 1, a pen or mouse (not shown), an external digitizer (not shown) and so on. In turn, the graphical windowing environment 200 may provide such user input to an application program 202 (FIG. 2) that includes a window having current input focus, wherein the user input is typically sent to the application window in the form of one or more keyboard character events. Note that a number of applications 200 may be executable by the computer system, however one application that is currently running is said to have input focus, and receive the input, such as via an input field therein, which is typically configured as a separate input window. Further, note that "application program" is intended to mean any executable software code, including conventional user mode applications, but also including operating system and other kernel mode components, or virtually any type of software module.

A preferred architecture employs a software input method manager 204 to provide a single and flexible interface for a plurality of different input methods, e.g., a selected input method 206. In general, the software input method manager 204 provides keystrokes from a selected input method 206 to the graphical windowing environment 200 (e.g., incorporated in the Windows® CE operating system). Once received, the graphical windowing environment 200 sends information corresponding to the user input data to the application program 202 whose window currently has input focus in the form of that keystroke, mouse or other message, such as communicated to the application via a call, or placed in a message queue of the application's window. As a result, any application capable of handling keyboard input may be used with any appropriately-configured input method 206.

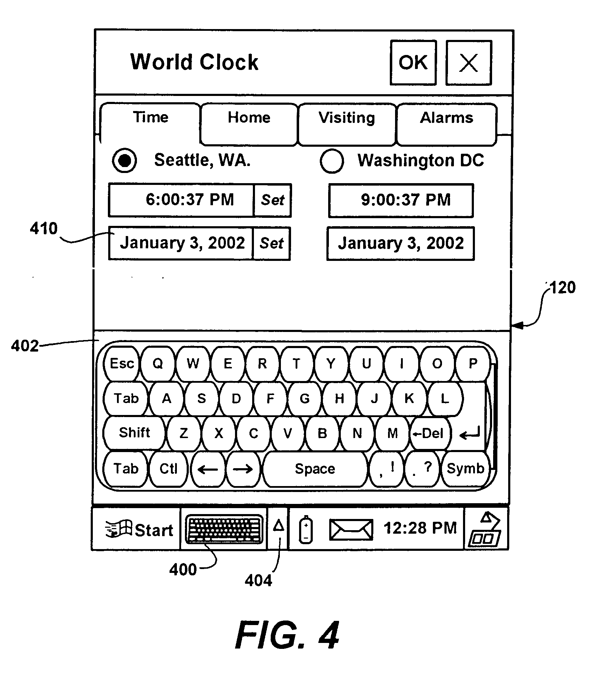

Interchangeable input methods 206 may include, for example, various different displayable keyboards, (soft keyboards), a calculator, a formula and/or equation editor, chemical symbol template, voice recognition, handwriting recognition, shorthand symbol recognition, or other application-optimized input methods (e.g. a barcode reader). For example, as represented in FIG. 4, the software input method manager 204 provides a user interface area 400 for permitting a user to toggle a software input method's window (panel) 402 between an opened and closed state. The software input method manager 204 also provides a user interface 404 enabling user selection from a displayable list of available input methods. A user interacting with the user interface 404 may select an input method, and in response, the software input method manager 204 loads and calls the selected input method, such as the input method 206 of FIG. 2.

In a preferred embodiment, each of the input methods communicates with the software input method manager 204 through a COM (Component Object Model) interface shown as IInputmethod 208 and IIMCallback 210. A COM object comprises a data structure having encapsulated methods and data that are accessible through specifically defined interfaces.

Generally, when the selected software input method's input panel 402 is toggled between on and off by a user, the software input method manager 204 informs the selected input method 206 to correspondingly open and close the panel 402 via an interface, e.g., through the IInputmethod interface 208. When a new input method is selected, the software input method manager 204, through the interface 208, informs any of the previously selected input methods to exit, and loads the newly selected input method. The interface 208 may also be utilized by the software input method manager 204 to obtain information specific to a selected input method.

The application 202 can communicate information to the software input method 206, such as via an API call. In turn the IInputMethod interface 208 is implemented by the selected software input method 206 for communicating with the selected software input method 206, to thereby notify it of state changes, and/or request action and information from the selected software input method 206. In general, if the called method succeeds, a success result is returned, and conversely, if the method fails, a failure result is returned. The following table sets forth some of the method calls available in this IInputMethod interface:

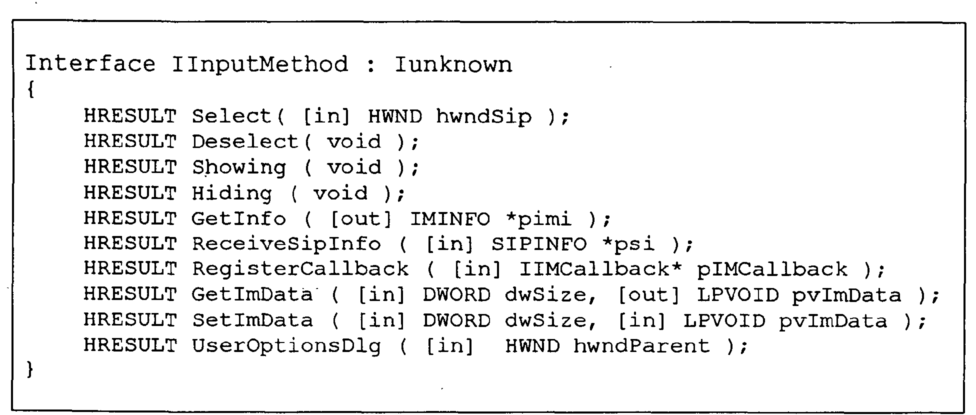

A selected software input method 206 will ordinarily receive a Select(), GetInfo(), ReceiveSipInfo() and Register Callback() method call, in sequence, before rendering the input panel 402 or responding to user actions. When the input panel 402 is displayed (i.e., turned on), Showing() will be called by the software input method manager 204, after which the selected software input method 206 issues a WM_PAINT message to render the input panel 402.

The Select() method is called when the selected software input method 206 has been selected. The selected software input method 206 generally performs any desired initialization in response to this call. The selected input method 206 is responsible for drawing the entire client area of the input panel 402, and thus ordinarily creates its windows and imagelists (collections of displayable bitmaps such as customized icons) in response to this call. For example, the window handle of the input panel 402 is provided to the selected software input method 206 as a parameter accompanying this Select() method call, and the input method normally creates a child window of this input panel 402. The selected software input method 206 is also provided with a pointer to a value, which is set to nonzero by the selected software input method 206 if the method call is successful or zero if not successful.

The Deselect() method is called when the selected software input method 206 has been deselected. The input panel 402 should be destroyed in response to this call, and the selected software input method 206 will typically perform any other cleanup at this time.

The Showing() method will cause the input panel 402 to be shown upon return from the call. Note that the input panel 402 need not be visible prior to this call, and that once the input panel 402 is shown, this window and its children will receive paint messages. Conversely, the Hiding() method hides the input panel 402 upon return from the call. Accordingly, the Showing() and Hiding () methods are used to toggle the input panel 402 between its open and closed states.

The GetInfo() method is called when the system is requesting information about the selected software input method 206. The information requested includes flags indicating any special properties of the selected software input method 206, the handles of two imagelists which contain masked bitmaps that are to be displayed on the button 400 when that selected software input method 206 is active, indices into the specified imagelists, and a rectangle indicating the preferred size and placement of the selected software input method 206. The call includes a parameter, pimi, which is a pointer to a data structure (IMINFO) that the selected software input method 206 should fill in with appropriate data. The call also provides a pointer to a value that the input method should set to nonzero to indicate success and zero to indicate failure.

The selected input method 206 may also communicate information to the software input method manager 204 via the IIMCallback mechanism 210, such as which character or characters were entered by a user, regardless of whether the character or characters are generated through keyboard selection, handwriting recognition, voice recognition, a formula editor, calculator or the like. Such character input is generally passed to the software input method manager 204, preferably received as (or converted to) a Unicode character by the software input method manager 204 and output to the graphical windowing environment 200. Command key information, such as "Ctrl" on a keyboard, may also be provided by the input method 206 to the software input method manager 204 via the callback interface 210. Input panel information and other input method-specific information may also be communicated from the selected software input method 206 through the software input method manager 204, and ultimately to the focused application program 202, when the application is configured to operate with the interchangeable input methods (that is, the application is "input method aware").

In general, the system operates as the application program 202 is executed and has focus, and an input method 206 is selected for that program. Note that, the input method 206 may be selected by the user, or the input method 206 may be one that remains after having been selected for a previous application, i.e., a particular input method stays the same as the user switches between various applications. Moreover, as described below with respect to the present invention, the state of the application can automatically be used to select an input method. In any event, as represented in FIG. 4, the input method 206 displays an input panel 402 (sometimes referred to as a SIP window) when selected.

As the user inputs data, appropriate data is passed to the software input method manager 204 via the IIMCallback mechanism. Note that the input method 206 may first process the received data. By way of example, one particular input method 206 may convert barcode symbols to Unicode characters representing digits, another input method may convert mathematical entries into a Unicode result (e.g., an entry of '3+6=' sends a '9' to the software input method manager 204), while yet another may be an equation editor (e.g., the characters "Sqrt" are converted into a single Unicode value representing a square root symbol). After any such processing, the input method 206 passes those digits to the software input method manager 204, which in turn passes those digits to the graphical windowing environment 200. The application may then receive the character data from the graphical windowing environment 200 as if the user had entered those digits on a physical keyboard, regardless of the actual input method used.

As shown in FIG. 4, the input panel (SIP window) 402 preferably comprises a rectangular area provided by the input method 206 that can be hidden or shown at the user's (or an application program's) request. The visible SIP actuation button 400 is located on a taskbar or the like, and provides a touch-sensitive interface by which the user displays or hides the SIP window 402. The soft input panel design supports SIP window sizes or positions that are different from that shown in FIG. 4.

Thus, the SIP system enables the selective installation of a specified input method 206, wherein each available input method is an interchangeable software component by which the user provides character, text or other user data via the touch-screen display (or some other input device). More particularly, the software input method manager 204 preferably exposes a COM interface that enables the selective installation of input methods 206. Notwithstanding, the input method 206 and software input method manager 204 can comprise virtually any components capable of communicating with one other through some mechanism, such as by receiving, responding to, and making function calls.

The input method 206 is responsible for drawing in the input panel 402 and responding to user input in the input panel 402. Typically, the input method 206 will respond to user input and convert that input into characters which are then sent to the software input method manager 204 via exposed SIP functions. By way of example, one input method 206 includes a default QWERTY (alpha) keyboard as represented in FIG. 4. More particularly, this input method 206 displays an image of the keyboard on the screen, and converts taps on that keyboard (detected as screen coordinates) into characters which are sent to the software input method manager 204 and thereby to the system. Input methods may be written by application vendors, and are added to the system using COM component installation procedures.

The user interacts with the input method 206 manifested in the visible SIP window 402 to create system input. The user can manually select a different input method by tapping a SIP menu button 404 on the taskbar that provides a pop-up input method list or the like (not shown) from which the user may manually select among available input methods. The user may also select an input method via a control panel applet (not shown) or the like.

As can be appreciated, applications can be aware of the SIP implementation, such as to adjust (e.g., resize) itself based on whether the SIP panel 402 is currently being displayed. Notwithstanding, applications need not be aware of the SIP system in order to benefit from the present invention, as indeed applications typically need not be concerned whether data received thereby originated at a hardware input device such as a keyboard or via user activity (e.g., contact or proximity detected by the screen detection circuitry) corresponding to a location within the soft input panel window 402. This enables virtually any application to operate with virtually any appropriate input method, regardless of whether that application is SIP-aware.

### DIRECTED SOFTWARE INPUT PANEL

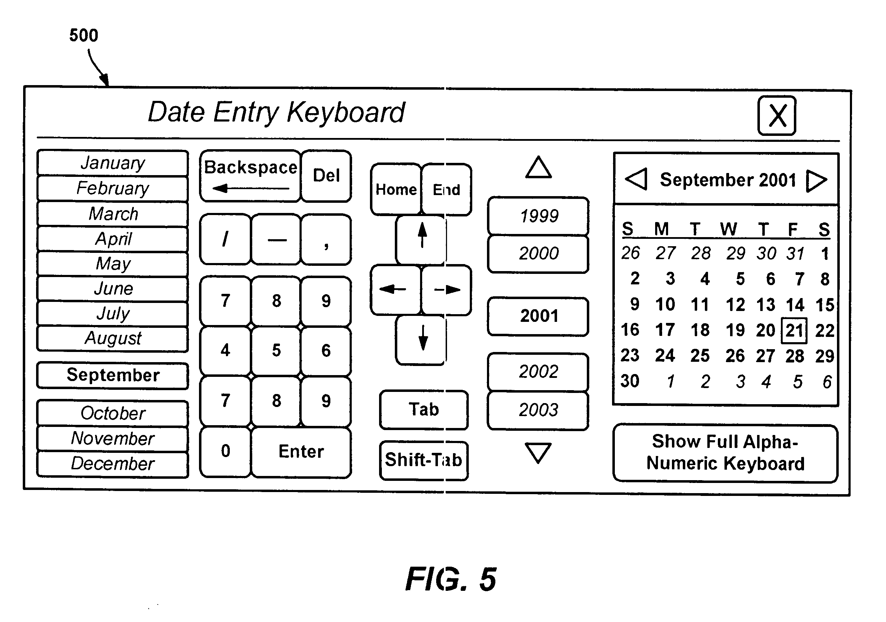

In accordance with one aspect of the present invention, the state of an application program 202 is used to select an input method and/or modify the choices (e.g., displayed keys and their meanings) with which a user can interact to provide input to the application program 202. In one example, the state of an application program 202 corresponds to which field (window) of the application program has current input focus. By way of example, if the application has a field in which a date can be entered, such as the date entry field 410 (FIG. 4), then the input method may be automatically changed from one that provides an alpha QWERTY keyboard as in FIG. 4, to an input method that provides a date entry keyboard 500 as in FIG. 5. Alternatively, the input method need not be changed, but a single input method can be arranged to display one of a plurality of input panels based on the application program's state.

Returning to the implementation represented in FIG. 2, the application can pass information to the software input method manager 204 via the graphical windowing environment or other suitable interface. In keeping with the present invention, this passed information can correspond to the state of the application, which in turn may correspond to a selected input method (or a selected or configured input panel of a multiple or configurable panel input method) that the application program 202 wishes to have active. Thus, in the date field example above, the application may specify that its current state corresponds to a date entry field. The software input method manager 204 may use this state information to query an input method selection database 214 or the like, and thereby determine which input method (or which input panel or configuration of a multiple-panel input method) to use. The software input method manager 204 then loads the corresponding software input method 206, if available on the system and not already loaded. In a situation in which a single input method has multiple input panels that it can provide, the software input method manager 204 notifies the software input method 206 of the field information or the like, whereby the software input method 206 can display the appropriate one.

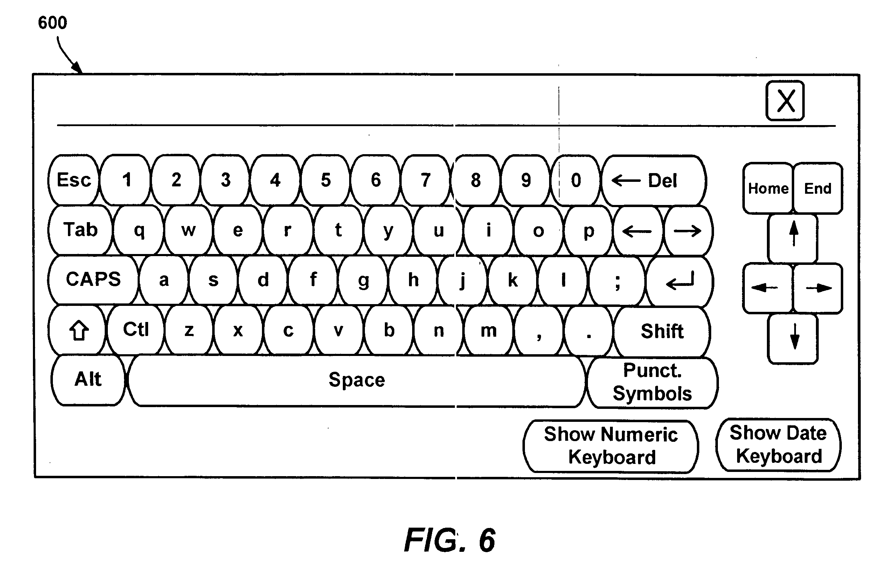

Thus, for example, as represented in FIGS. 4 and 5, when the application indicates that a date field 410 is being edited, the date entry input panel 500 is displayed. As represented in FIG. 5, large, date-related keys are provided for months, days and years, along with a grid-like calendar. For example, a single keystroke can be used to send the month string "January" to the application, one or two keystrokes for the date, and one keystroke for the four digit year. Alternatively, a single keystroke on the calendar day can send an entire string. Also, a user can request a full keyboard (e.g., the keyboard 600 FIG. 6) if some particularly desired character is not available. Note that the example keyboard 600 of FIG. 6 includes a key that allows the "Date" keyboard to be restored.

Note that while these are only example illustrations of keyboards, in general the keys are enlarged and directed to the application's current state by each key's representation and/or what that key will output when contacted, i.e., its meaning. In this manner, with the present invention, both usability and user convenience may be improved relative to general purpose keyboards.

In keeping with the present invention, the application program 202 may include a database 216 or the like of data that was previously entered (e.g., prior user input) for this field. When the application program 202 passes the field information to the in software input method manager 204, or shortly thereafter, the application program 202 thus can also provide a list of customizations or the like for passing to the selected input method 206, for rendering what is essentially a customized keyboard. Note that this need not be limited to information previously entered by the user, but can, for example, include default information (e.g., links to the ten most popular websites) provided by another entity.

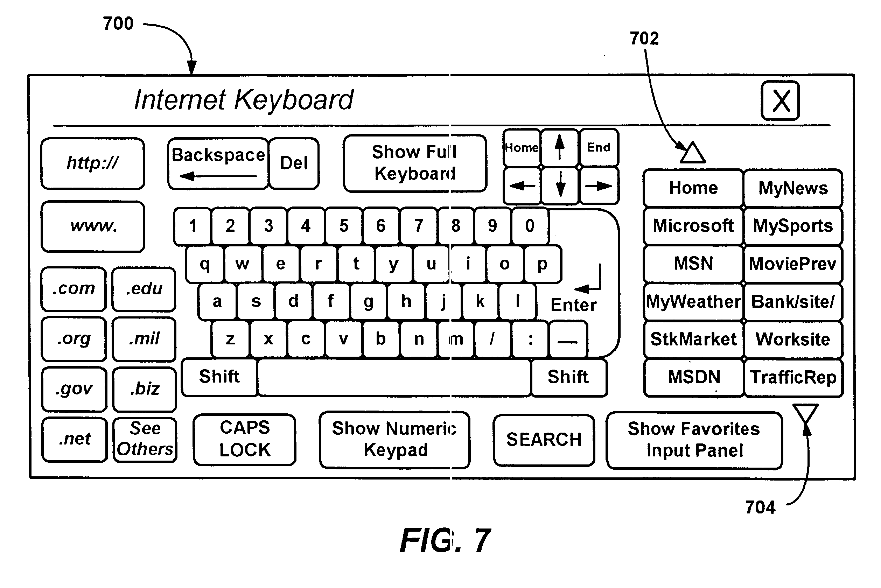

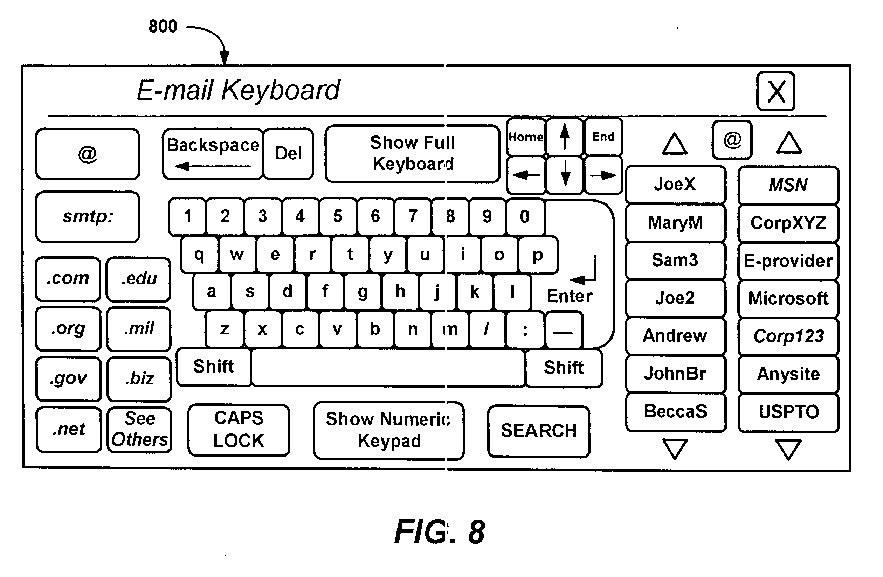

By way of example, FIG. 7 represents an Internet-directed keyboard 700, such as invoked when an application field is directed to receiving user-entered network addresses or the like. Likely-useful fixed keys (such as representing the strings "http://" or "www." or the like, and common extensions e.g., ".com") may be provided, along with previously-entered addresses, such as the most frequently entered ones, most recently entered ones, or some combination of both. To this end, the application can maintain this information in a database 212 pf previously entered data, and provide it to the software input method 206 via the software input method manager 204. In turn the selected software input method 206 stores the data in a suitable location 218. In one preferred implementation, the data is passed via XML (eXtensible Markup Language) formatted information, although as is understood, rather than pass the data itself, a pointer to a buffer or the like that includes the data may be passed. Note that for network addresses, for each such customizable key, the full address string and a corresponding short string to display on the key (which may be user-configurable via a utility or the like) is preferably provided. Further, note that more information than displayed keys may be provided, and made accessible via scroll buttons 702, 704 or the like provided on the display, to make the keyboard more convenient for the user. As another example, FIG. 8 shows a directed software input panel in the form of a keyboard customized for e-mail address entry.

It should be emphasized that the input methods and panels are independent of the application program. Thus, multiple application programs can each have many of the same types of fields, such as date fields, with an instance of the same input method available to both. Note that this saves significant storage space and development work for application developers, while giving the user a consistent user experience, yet one that can be customized to an extent by each application.

Once the keys are displayed, the user can activate one, whereby a key determination mechanism 220 in the software input method 206 figures out, via a coordinates-to-key conversion mechanism 222, which key has been pressed. If the key has a fixed meaning as to what it is supposed represents, the key determination mechanism 220 may look it up in a table or the like, and returns the meaning in the form of an appropriate character, string, symbol, command or other appropriate data to the application program 202. If the key is variable, then the key determination mechanism 220 accesses the application provided information 218 to determine the character, string, symbol, command or other appropriate data to return, as previously provided by the application. Note that in an alternative implementation, the input method can dynamically call the application when needed to find out a key's meaning.

As is true with software input methods in general, the software input method 206 can also perform more complex processing on user input, such as validation. For example, a change password input field may have a corresponding input method that requires the user to enter the entire password (rather than send one character at a time to an application), and then have the input method validate the user's data to ensure it complies with strong password requirements, (e.g., eight or more characters, one uppercase letter, a mixture of letters with numbers and symbols, and so on). The input method can perform such processing. Other concepts such as character or language translation, recognition of handwriting or speech, and so on may be performed in an input method.

In addition to basing the information on a focused field, the application and input method may base it on any agreed upon state-identification code. For example, an application may want different types of input panels within the same field, such as to insert an equation into a word processing document, or an application may not have fields. In any event, the application can communicate some state data to the software input method manager 204, to change a desired input method to and from a more-directed software input panel, or change an input method's input panel. Thus, as in understood, receiving field focus is not a requirement for selecting a directed input panel based on application state, nor is the time of initial focus the only time an application can change state.

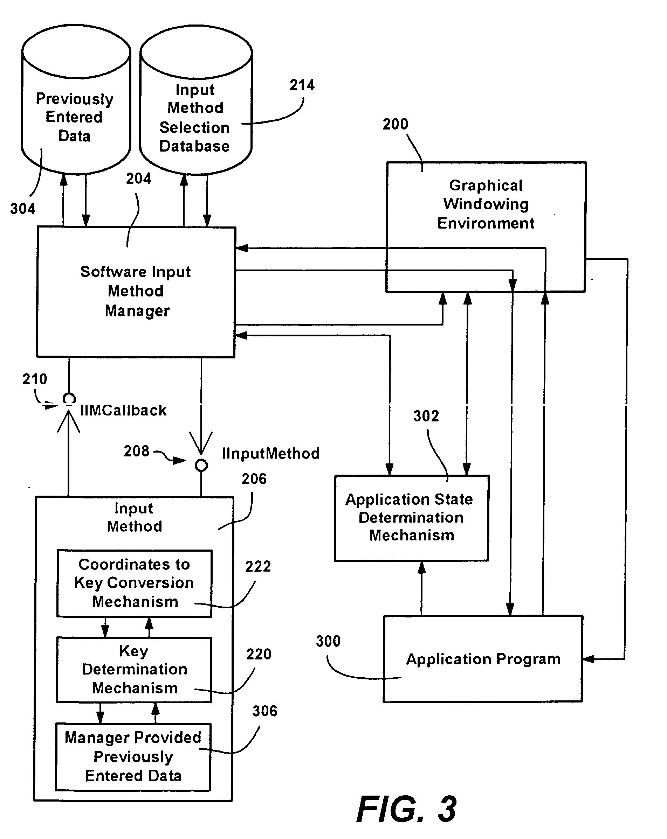

In an alternative implementation represented in FIG. 3, an application 300 need not be aware of the selectable input methods of the present invention to benefit from automatic selection of a directed input panel in accordance with the present invention. In general, this is because information about an application's state can be externally determined, e.g., by an application state determination mechanism 302, and used to provide an appropriate software input panel.

By way of example, much of the information about an application's windows can be determined from the graphical windowing environment 220. Thus, whenever an application's field receives focus, the application state determination mechanism 302 may query the operating system to determine properties of the field, such as whether its window class indicates it is a field for text editing, and so on. It is further possible to analyze the window properties, or the application itself (such as its display), to determine with more specificity as to the type of text field, e.g., one that seeks a date, a telephone number, an address and so forth.

Once the focused field is classified, it may be used to access (via the input method selection database 214) an identifier of a suitable input method and/or input panel of an input method, as generally described above. Thus, and in general, it does not matter the source (e.g., the external mechanism 302 or an application program) of the state data that is received by the software input method manager 204, only that the application state information (e.g., a field code) is received such that an input method / input panel may be automatically selected.

As also represented in FIG. 3, a database 304 of previously-entered data (e.g., by the user) may be maintained by the software input method manager 204, or alternatively by the particular input method (not separately shown). In this manner, for example, most recently used and/or most frequently used data such as e-mail addresses, network addresses and other user-specific data may be stored or otherwise accessible to the selected input method 206, such as in the manager-provided, previously-entered data 306 in FIG. 3. Again, such data that can be displayed on keys and used as the keys' meanings may be tracked from actual user input and/or from some default information. As can be readily appreciated, this enables the present invention to be used with applications that are completely unaware of interchangeable input method functionality.

Note that it is feasible to have combinations of the implementations described in FIGS. 2 and 3. For example, the application may directly communicate the state information used to select the input method / input panel as in FIG. 2, but also specify (by a communication or by default) that the software input method manager 204 should provide the input method 206 with data from the manager's database 304, as in FIG. 3. In this manner, applications can specify the state, but the previously entered data can be shared across applications as appropriate, whereby multiple applications with similar state (e.g., corresponding to input fields) need not keep separate data, possibly leading to a more consistent user experience.

As another alternative, it is also possible to have the user manually select an input method for relating to a particular application's field, and then specify (via a checkbox or the like) that when this particular field is focused, the system should thereafter default to the currently selected input method. In this manner, a user may override what an application program or the software input method manager 204 would otherwise select.

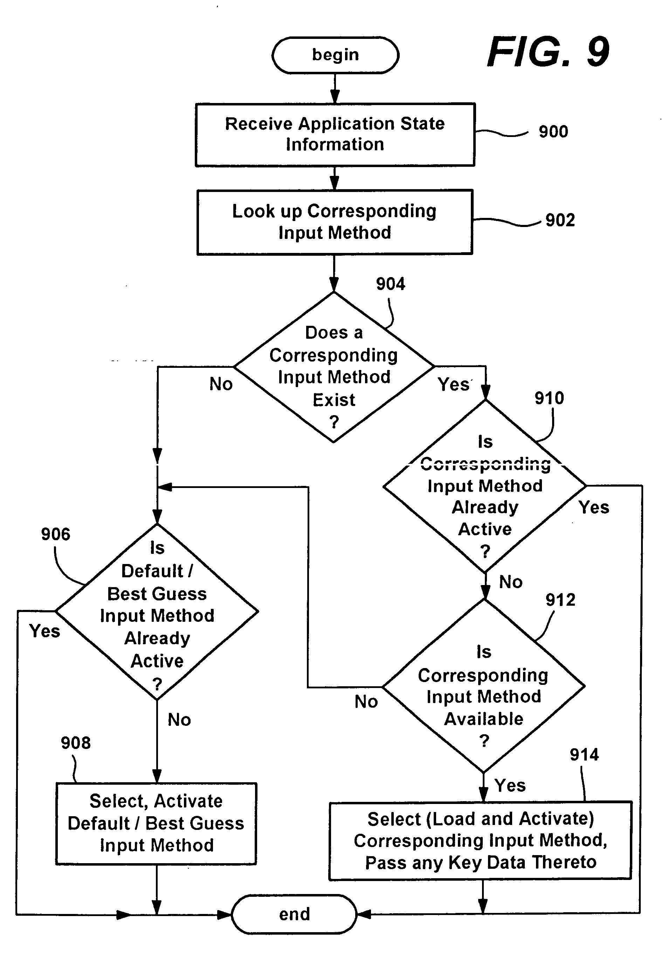

By way of summary, FIG. 9 provides an explanation of the operation of the present invention. As represented in FIG. 9, at step 900, the software input method manager 204 receives the application program's state, either from the application program 202 itself (FIG. 2), or via the application state determination mechanism 302 that analyzes the application 300, e.g., via its window properties (FIG.3). With the state information, the software input method manager 204 looks up a corresponding input method to use in the input method selection database 214.

Note that it is possible that the application program has communicated a state for which no corresponding input method exists, e.g., there is no entry for it in the input method selection database 214. Step 904 detects this condition, which causes the process to branch to step 906. Steps 906 and 908 load a default input method (e.g., one with a full alphanumeric keyboard as its input panel) or a best guess for the state, such as if some information is known about it. For example, whenever an unknown state is detected and the first action the user takes is to manually select an input method that is different from the one chosen by default or best guess, such information may be tracked and used to change the default / best guess for this state.

Returning to step 904, if a corresponding input method exists for the state, step 904 branches to step 910 which checks whether this particular input method is already active. If so, the process ends, although it is feasible to have the input method first restore any changeable keys to their initial (e.g., non-scrolled) meanings and appearance. Otherwise, step 912 is executed to determine whether the corresponding input method is available for loading. For example, an installable object such as an optional input method may be deleted from a system in many ways, without the input method selection database 214 being updated to reflect such a deletion. In such an instance, step 912 will branch to step 906 to load an alternative one if necessary at step 908, as described above.

Thus, if an input method corresponding to an application program's state exists, is not already active and is available, it is automatically selected (loaded and activated) at step 914, with any configuration data passed thereto. In this manner, a user will automatically receive a suitable, useful and possibly customized key configuration at an appropriate moment.

As can be seen from the foregoing detailed description, there is provided an improved method system for entering user data into a computer system. The method and system may increase usability and convenience, such as by displaying larger keys due to a lesser number being needed, yet providing keys that are adapted to a given situation, based on an application's state.

While the invention is susceptible to various modifications and alternative constructions, certain illustrated embodiments thereof are shown in the drawings and have been described above in detail. It should be understood, however, that there is no intention to limit the invention to the specific forms disclosed, but on the contrary, the intention is to cover all modifications, alternative constructions, and equivalents falling within the spirit and scope of the invention.

## Claims

1. A system configured to provide user input to an application program, comprising:
a plurality of software input methods that are independent of the application program, each software input method having an input panel configured to receive user input based on user interaction therewith; and
a software input method manager, the software input method manager configured to select one of the input methods based on a state of the application program, to enable user interaction with the input panel of the input method to provide input to the application program.

2. The system of claim 1 wherein the application program communicates the state to the software input method manager.

3. The system of claim 3, further comprising, a component external to the application program that determines the state of the application and communicates the state to the software input method manager.

4. The system of claim 1 wherein the state of the application program corresponds to a field having input focus.

5. The system of claim 4 wherein the application program communicates data corresponding to the field to the software input method manager, and wherein the software input method manager selects the input method based on the data.

6. The system of claim 3 wherein the application program communicates data corresponding to the field to the software input method manager, and wherein the software input method manager selects the input method based on the data.

7. The system of claim 1 wherein the application program communicates the key-related data to the software input method, and wherein the software input method configures at least some keys on the input panel based on the key-related data.

8. The system of claim 7 wherein the application program communicates the key-related data to the software input method via an XML format.

9. The system of claim 7 wherein the key-related data includes a string corresponding to a meaning of at least one variable key.

10. The method of claim 1 further comprising, a database of previous use input information, wherein the software input method configures at least some keys on the input panel based on the previous user input information.

11. A computer-implemented method, comprising:
receiving, from an application program, application program state data at a software input method manager;
selecting a selected input method from a plurality of software input methods, each software input method being independent of the application program and having an input panel configured to receive user input based on user interaction therewith; and
returning data to the application program corresponding to user interaction with the input panel, the input panel having at least one displayed key that when actuated returns a string of at least two characters to the application program.

12. The method of claim 11 further comprising, receiving key configuration data in relation to the selected input method, and configuring at least one key on the input panel based on the key configuration data.

13. A computer-readable medium having computer-executable instructions for performing the method of claim 14.

14. A computer-implemented method, comprising:
receiving application program state data at a software input method manager;
selecting an input panel based on the application program state data, the input panel independent of the application program;
displaying keys on the input panel to enable user interaction with the input panel; and
returning key data to the application program corresponding to user interaction with the input panel.

15. The method of claim 14 wherein receiving application program state data comprises receiving data corresponding to a communication from the application program.

16. The method of claim 14 wherein receiving application program state data comprises receiving data corresponding to a communication from component external to the application program.

17. The method of claim 14 wherein selecting an input panel comprises loading an input method.

18. The method of claim 14 wherein selecting an input panel comprises notifying a loaded input method.

19. The method of claim 14 further comprising, receiving key configuration information corresponding to the state, and configuring at least some of the keys on the input panel based on the key configuration information.

20. The method of claim 19 wherein receiving key configuration information comprises receiving data corresponding to a communication from the application program.

21. The method of claim 19 wherein receiving key configuration information comprises receiving data corresponding to a communication from component external to the application program.

22. The method of claim 21 wherein receiving data corresponding to the communication from the component external to the application program comprises, accessing a database.

23. The method of claim 14 wherein returning key data to the application program comprises, returning a string of at least two characters in response to a single displayed key being actuated.

24. A computer-readable medium having computer-executable instructions for performing the method of claim 14.
